(19) **Europäisches Patentamt**
**European Patent Office**
**Office européen des brevets**

(11) **EP 2 553 908 B1**

(12) **FASCICULE DE BREVET EUROPEEN**

(45) Date de publication et mention
de la délivrance du brevet:
**26.08.2015 Bulletin 2015/35**

(21) Numéro de dépôt: **11715973.1**

(22) Date de dépôt: **22.03.2011**

(51) Int Cl.:
**H04L 29/12** *(2006.01)*

(86) Numéro de dépôt international:
**PCT/FR2011/050606**

(87) Numéro de publication internationale:
**WO 2011/117534 (29.09.2011 Gazette 2011/39)**

(54) **SERVEUR DNS, PASSERELLES ET PROCEDES POUR LA GESTION D'UN IDENTIFIANT D'UNE PLAGE DE PORTS DANS LA TRANSMISSION DE DONNEES**

DNS-SERVER, GATEWAYS UND VERFAHREN ZUR VERWALTUNG EINES IDENTIFIKATORS EINES PORT-BEREICHS BEI DER ÜBERTRAGUNG VON DATEN

DNS SERVER, GATEWAYS AND METHODS FOR MANAGING AN IDENTIFIER OF A PORT RANGE IN THE TRANSMISSION OF DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2010 FR 1052209**

(43) Date de publication de la demande:
**06.02.2013 Bulletin 2013/06**

(73) Titulaire: **Orange**
**75015 Paris (FR)**

(72) Inventeurs:
• **GRIMAULT, Jean-Luc**
**F-14120 Mondeville (FR)**
• **KASSI LAHLOU, Mohammed**
**F-14790 Fontaine Etoupefour (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
• **BOUCADAIR M ET AL: "Anticipate IPv4 Address Exhaustion: A Critical Challenge for Internet Survival", EVOLVING INTERNET, 2009. INTERNET '09. FIRST INTERNATIONAL CONFERENCE ON, IEEE, PISCATAWAY, NJ, USA, 23 août 2009 (2009-08-23), pages 27-32, XP031540612, ISBN: 978-1-4244-4718-3**
• **GULBRANDSEN TROLL TECHNOLOGIES P VIXIE INTERNET SOFTWARE CONSORTIUM L ESIBOV MICROSOFT CORP A: "A DNS RR for specifying the location of services (DNS SRV); rfc2782.txt", IETF STANDARD, INTERNET ENGINEERING TASK FORCE, IETF, CH, 1 février 2000 (2000-02-01), XP015008565, ISSN: 0000-0003**
• **Jim Rees: "PE-ARP: Port Enhaced ARP for IPv4 Address Sharing", , 30 septembre 2009 (2009-09-30), page 14 PP, XP002616240, Lansing Extrait de l'Internet: URL:http://www.merit.edu/ networkresearch/p apers/pdf/2009/MTP-2009-01.pdf [extrait le 2011-01-11]**

**Description**

Arrière-plan de l'invention

L'invention se rapporte au domaine général des échanges de données via Internet et concerne plus particulièrement les communications entre applications distantes via des passerelles d'accès.

De façon connue, une passerelle d'accès offre la possibilité à une pluralité de terminaux d'un même réseau local de communiquer avec des réseaux distants, et ce via le réseau Internet par exemple.

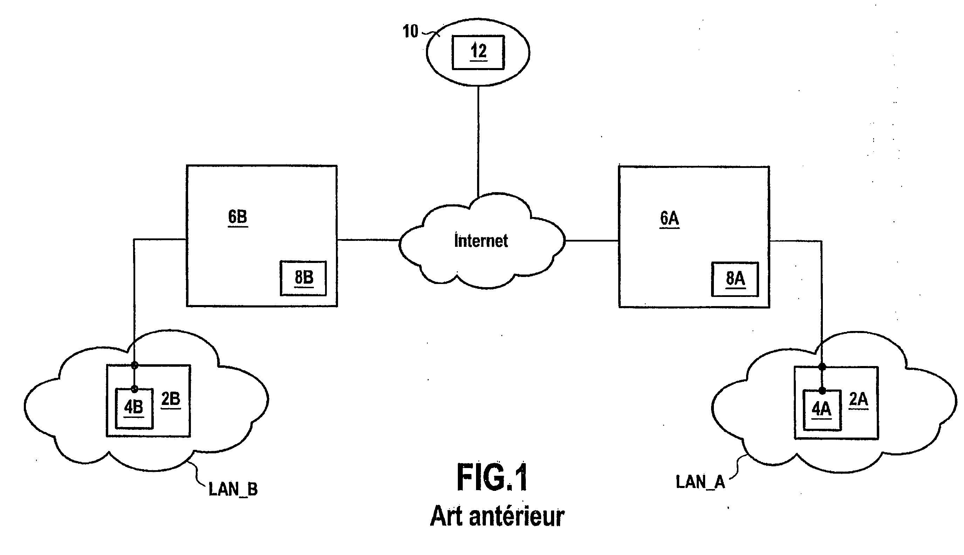

La figure 1 présente un exemple dans lequel un premier terminal 2A, compris dans un réseau local LAN_A, peut communiquer avec un serveur distant 2B situé dans un réseau local distant LAN_B. Pour ce faire, une première passerelle 6A est placée en coupure de flux entre le terminal 2A et le réseau Internet, et la seconde passerelle 6B est placée en coupure de flux entre le serveur 2B et le réseau Internet. De cette manière, un client applicatif 4A mis en oeuvre dans le terminal 2A peut communiquer avec une application distante 4B située dans le serveur 2B. Dans cet exemple, on considère un navigateur Web mis en oeuvre sur le terminal 2A et susceptible de communiquer avec un serveur Web mis en oeuvre dans le serveur 2B.

De manière générale, chaque équipement connecté directement à Internet (telles que les passerelles 6A et 6B, par exemple) doit être identifié par une adresse IP dite «adresse publique» pour pouvoir communiquer avec d'autres équipements sur Internet. Une telle adresse est attribuée, par exemple, à l'occasion d'un enregistrement auprès d'un serveur DHCP (serveur attribuant des adresses IP selon le protocole « *Dynamic Host Configuration Protocol»*). On dit qu'une adresse IP publique est routable sur Internet, c'est-à-dire, qu'elle peut être utilisée pour identifier la source ou la destination d'un paquet de données transféré via Internet.

Par ailleurs, chaque équipement hôte d'un réseau local (tel que le terminal 2A ou le serveur 2B) doit être identifié au moyen d'une adresse IP dite « adresse privée » ou « adresse locale », cette adresse étant propre au réseau local en question. Une adresse IP locale ne peut être attribuée qu'à un seul équipement au sein d'un réseau local donné, ce qui permet à une passerelle d'identifier les équipements avec lesquels elle communique dans son réseau local. Une adresse locale n'est pas routable sur Internet, ce qui signifie qu'elle ne peut être utilisée en dehors du réseau local considéré.

Aujourd'hui, le nombre d'adresses IP publiques attribuées à une passerelle donnée est fréquemment inférieur au nombre d'équipements (terminaux, serveurs...) présents dans le réseau local de cette passerelle. La passerelle met alors en oeuvre une fonction NAT (pour «*Network Address Translation*») qui consiste à stocker les correspondances entre les adresses IP locales et publiques dans une table sous forme de paires (*adresse locale, adresse publique*). La passerelle est alors capable d'affecter dynamiquement les adresses publiques dont elle dispose aux équipements de son réseau local qui souhaitent communiquer à un instant donné avec l'extérieur du réseau local.

En outre, la fonction NAT met fréquemment en jeu les ports (UDP ou TCP) des sessions de communication des équipements afin d'économiser l'usage de l'adresse (ou des adresses) publique attribuée à la passerelle. La fonction NAT est alors une fonction dite NAPT («Network Address Port Translation») qui consiste à stocker les correspondances entre les adresses IP locales et publiques, ainsi que les ports publics et ports privés correspondants. Chaque correspondance est alors stockée dans une table sous la forme d'une entrée (*adresse locale, port local, adresse publique, port public*). Dans ce document, le terme « NAPT » est désigné plus simplement par le terme « NAT ».

Ainsi, les passerelles 6A et 6B mettent à jour leur tables NAT 8A et 8B respectives dès qu'elles procèdent à de nouvelles affectations d'adresses publiques et de ports associés.

Par ailleurs, le protocole Internet utilisé principalement aujourd'hui pour mettre en oeuvre les adresses IP est désigné sous l'acronyme IPv4 (pour « *Internet Protocol version 4»*). Cette version de protocole IP permet d'attribuer des adresses IP, dites IPv4, codées sur 4 octets, ce qui correspond à un codage en 32 bits. Une adresse IPv4 est représentée généralement sous la forme de quatre nombres décimaux séparés par des points, comme par exemple 193.43.55.67.

Or, il est communément admis par la communauté des fournisseurs de service de connectivité IP que l'épuisement des adresses IPv4 publiques disponibles est inévitable. En effet, le codage des adresses IPv4 en 32 bits limite à $2^{32}$ (soit 4 294 967 296) le nombre d'adresses IPv4 possibles, et donc le sous ensemble des adresses publiques distinctes qui peuvent être attribuées au sein du réseau Internet par les autorités habilités (l'IANA, par exemple, pour « *Internet Assigned Numbers Authority* »). Les premières pénuries d'adresses publiques IPv4 sont en effet prévues pour le début 2011.

Cette perspective amène les opérateurs à planifier des solutions pour pallier cette pénurie. Ainsi, pour s'affranchir à terme de la limitation du codage en 32 bits des adresses IPv4, les opérateurs mettent progressivement en place une nouvelle version de protocole IP, désigné sous l'acronyme IPv6 (Protocol Internet version 6). Ce nouveau protocole permet de coder les adresses IP en 128 bits ($2^{128}$ adresses IP distinctes possibles), offrant ainsi un espace d'adressage bien plus important. Cependant, un certain temps sera nécessaire pour que ce nouveau protocole soit mis en oeuvre et harmonisé dans tout le réseau Internet.

Par ailleurs, une des solutions transitoires, en parallèle aux déploiements d'IPv6, consiste à permettre le partage d'adresses IPv4 publiques entre plusieurs clients sur Internet. De cette manière, plusieurs clients (passerelles etc.) peuvent se connecter à Internet en utilisant une seule et même adresse IPv4 publique, dite adresse partagée.

Dans la suite de ce document, on entendra par « adresse » ou « adresse IP » une adresse IPv4.

Aujourd'hui, certains systèmes permettent déjà la gestion d'adresses IPv4 partagées sur Internet. Une solution désignée communément par « plage de ports » (ou « *port range* » en anglais) a notamment été mise au point pour répondre à la pénurie d'adressesIPv4. Cette solution consiste à affecter à une passerelle d'accès à Internet :

- une adresse Ipv4 publique partagée, et
- une plage fixe de ports source autorisés.

Le principe de fonctionnement du procédé « port range » est décrit ci-dessous en référence à la passerelle d'accès 6A illustrée en figure 1.

Selon le procédé « port range », la passerelle 6A se voit affectée une adresse publique IPv4 dénotée *AdresPub* ainsi qu'une plage de ports autorisés *PlagePorts_A,* par exemple la plage allant du port 1024 au port 2047. L'adresse publique *AdresPub* est une adresse partagée qui peut être affectée à d'autres passerelles, telle que la passerelle 6B par exemple, à condition que la plage de ports associée *PlagePorts_B* soit complètement disjointe de la plage *PlagePorts_A.*

De plus, la passerelle 6A met en oeuvre une fonction NAT : lorsqu'elle reçoit en provenance du terminal 2A et à destination du serveur 2B un paquet de données IP spécifiant comme source l'adresse privée du terminal 2A et le port source associé à l'application 4A, la passerelle 6A remplace l'adresse source du paquet par l'adresse publique *AdresPub* et, si nécessaire, modifie le port source afin qu'il soit compris dans la plage *PlagePorts_A.*

D'autre part, lorsqu'un paquet de données est émis depuis Internet vers la passerelle 6A, un équipement spécifique dans le réseau Internet noté PPR (pour« Port Range Router », non représenté dans la figure 1) est capable de déterminer la passerelle vers laquelle le paquet doit être envoyé, et ce à partir de l'adresse IPv4 de destination et du port de destination inclus dans le paquet en question. Le PPR oriente alors le paquet en transit vers la passerelle de destination appropriée, et ce sans modifier le paquet en question. Par exemple, si le PRR détermine que l'adresse de destination du paquet est *AdresPub* et que le port de destination de ce même paquet est compris dans la plage *PlagePorts_A,* il oriente alors le paquet vers la passerelle 6A.

A noter que le champ d'application du procédé « port range » ne se limite pas aux passerelles d'accès sur Internet, mais peut s'appliquer à d'autres équipements tels que les terminaux mobiles par exemple.

Le procédé « port range » est notamment décrit dans les documents WO2009/125158A2, WO2010/004156A1 et WO2010/004180A1.

Cependant le procédé « port range » présente des inconvénients dans certains usages.

Par exemple, si la passerelle 6B met en oeuvre le procédé « port range », le navigateur Web 4A sur le terminal 2A sera en général dans l'incapacité d'accéder au serveur Web 4B hébergé dans le serveur 2B. En effet, pour accéder au serveur Web, le navigateur Web doit envoyer à la passerelle 6B des paquets de données IP avec l'adresse publique de destination et le port public de destination associés au serveur Web 4B dans les entrées NAT 8B. Un serveur Web est une application connue qui est accessible par défaut sur le port privé 80 (protocole HTTP). Or, puisque la passerelle 6B met en ouvre la fonction « port range », celle-ci associe dans une entrée de sa table NAT 8B le port privé 80 à un port public donné *PortPub_Serveur* compris dans la plage *PlagePorts_B.* En général, le navigateur Web 4A n'a pas connaissance du port public *PortPub_Serveur* affecté par la passerelle 6B au serveur Web 4B et ne peut donc pas accéder à ce dernier.

Il est donc nécessaire que le serveur Web 4B communique son port public *PortPub_Serveur* à tous ses clients applicatifs potentiels, et notamment au navigateur Web 4A. Différentes techniques permettent à un client applicatif tel que le navigateur Web 4A de déterminer *PortPub_Serveur.* Le serveur Web 4B peut, par exemple, mettre en place une balise HTTP contenant la valeur de *PortPub_Serveur* dans une page Web d'un autre serveur sur Internet. Cependant, cette pratique est contraignante et peu courante. De plus, pour des applications autres qu'un serveur Web, la technique des balises HTTP n'est pas envisageable. Une autre technique consiste à indiquer au préalable aux serveurs DNS 10 (pour « *Domaine Name Server*») la valeur de *PortPub_Serveur* affectée par la passerelle 6B au serveur Web 4B. Cette fonctionnalité, désignée sous l'acronyme SRV (« enregistrement de service » ou « Service record » en anglais) est une option DNS qui permet de stocker dans un serveur DNS un port correspondant à un service, en association avec une adresse IP. Ainsi, Il peut être stocké dans le serveur DNS 10 le numéro de port public à utiliser pour accéder à une application distante en association avec l'adresse IP publique de la passerelle correspondante. Ces informations sont stockées, par exemple, dans une table 12 comprise dans le serveur DNS 10. Le navigateur Web 4A, par exemple, peut envoyer une requête via sa passerelle 6A au serveur DNS 10 et recevoir en réponse l'adresse IP de destination du serveur Web 4B ainsi que le port public associé *PortPub_Serveur.*

Cependant, l'utilisation du procédé SRV dans le cadre de la solution « port range », comme proposé dans BOUCADAIR M et Al : "Anticipate IPv4 Address Exhaustion: a Critical Challenge for Internet Survival", 23 août 2009, XP031540612, ISBN: 978-1-4244-4718-3, n'est pas satisfaisante puisque de nombreux clients applicatifs (tels que la plupart des navigateurs Web) ne sont pas aujourd'hui capables d'exploiter la fonctionnalité SRV.

Il existe donc aujourd'hui un besoin pour une solution permettant la mise en oeuvre d'une adresse publique partagée suivant une pluralité de plages de ports, et ce sans les limitations et inconvénients inhérents à la solution « port range » conventionnelle. Plus précisément, il existe un besoin pour une version améliorée de la solution « port range », de manière à ce que des applications distantes puissent communiquer ensemble via Internet bien qu'elles ignorent le port public de leurs correspondants.

Objet et résumé de l'invention

A cet effet, l'invention concerne un procédé de gestion d'une requête DNS réalisé par un serveur DNS, le procédé comprenant :

- une étape de réception d'une requête DNS pour accéder à une application distante accessible via une passerelle, et
- une étape d'envoi d'une réponse DNS comprenant l'adresse IP de ladite passerelle,

le procédé étant caractérisé en ce qu'il comprend en outre :

- une étape de vérification pour déterminer si un identifiant d'une plage de ports est stocké dans le serveur DNS en association avec adresse IP de la passerelle, et
- dans l'affirmative, une étape d'insertion de l'identifiant dans la réponse DNS avant l'envoi de la réponse DNS.

L'Invention permet ainsi de stocker dans un serveur DNS l'identifiant d'une plage de ports allouée à une passerelle en association avec l'adresse IP de cette passerelle. Lorsqu'un serveur DNS selon l'invention reçoit une requête DNS pour accéder à une application distante accessible via une passerelle distante, le serveur DNS envoie en retour une réponse DNS comprenant l'adresse IP de la passerelle distante. De plus, si le serveur DNS détermine qu'un identifiant d'une plage de ports est stocké en association avec l'adresse IP de la passerelle distante, le serveur DNS insert cet identifiant dans la réponse DNS. Une telle insertion est par exemple possible en utilisant la fonctionnalité SRV décrite précédemment.

La réponse DNS est, par exemple, envoyée à la passerelle requérante ayant transmis la requête DNS au serveur DNS. La présence de l'identifiant de plage de ports dans la réponse DNS permet alors à la passerelle requérante d'identifier une plage de ports allouée à la passerelle distante. La présence d'un tel identifiant dans la réponse DNS signifie que la passerelle distante utilise une adresse IP partagée.

D'autre part, l'identifiant d'une plage de ports peut correspondre, par exemple, à un nombre entier positif identifiant une plage de ports allouée à la passerelle.

Dans un mode particulier de réalisation, les différentes étapes du procédé de gestion d'une requête DNS sont déterminées par des instructions de programmes d'ordinateurs.

En conséquence, l'invention vise aussi un programme d'ordinateur sur un support d'informations, ce programme étant susceptible d'être mis en oeuvre dans un serveur DNS ou plus généralement dans un ordinateur, ce programme comportant des instructions adaptées à la mise en oeuvre des étapes d'un procédé de gestion d'une requête DNS tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

L'invention vise également un procédé de transmission de données dans une première passerelle vers une seconde passerelle, le procédé comprenant :

- une étape préliminaire de stockage dans la première passerelle d'un identifiant d'une plage de ports et de l'adresse IP associés à la seconde passerelle vers laquelle les données doivent être transmises, l'identifiant étant obtenu d'un serveur DNS en réponse à une requête DNS conformément au procédé de gestion d'une requête DNS décrit ci-dessus,
- une étape de détermination, à partir de l'identifiant, du numéro de port de destination vers lequel les données doivent être transmises, et
- une étape d'envoi des données au numéro de port de destination de la seconde passerelle.

Le procédé de transmission de données mentionné ci-dessus est réalisé dans une première passerelle. La première passerelle est ainsi capable de déterminer, à partir dudit identifiant, un numéro de port de destination vers lequel les données doivent être transmises, le numéro de port de destination étant compris dans la plage de ports allouée à la seconde passerelle. De cette manière, la première passerelle peut transmettre des données à une seconde passerelle utilisant une adresse IP partagée.

Par ailleurs, l'étape de détermination peut comprendre en outre :

- lorsqu'un numéro de port de destination est initialement inclus dans les données, la détermination lors de l'étape de détermination du numéro de port de destination vers lequel les données doivent être transmises à partir de l'identifiant et du numéro initial de port de destination, et le remplacement du numéro initial de port de destination par le nouveau numéro de port de destination ainsi déterminé, ou
- lorsqu'aucun numéro de port de destination n'est initialement inclus dans lesdites données, l'encapsulation des données dans un paquet de données (typiquement IP/UDP) comprenant le port de destination déterminé lors de l'étape de détermination.

L'invention permet ainsi à une passerelle de transmettre des paquets de données dépourvus de port de destination vers une passerelle utilisant une adresse IP partagée. C'est le cas, par exemple, des paquets de type ICMP/Ping émis depuis un client applicatif vers un service applicatif.

Dans un mode de réalisation particulier, l'identifiant est un nombre entier positif I et le numéro de port de destination déterminé par la première passerelle est égal au numéro initial de port de destination incrémenté de ($I \cdot N$) ports, N étant un nombre entier positif prédéterminé.

Dans une mise en ouvre particulière, le procédé de transmission de données comprend en outre la transmission, avec les données, d'un numéro de port source déterminé à partir d'un identifiant d'une plage de ports associé à la première passerelle, l'identifiant étant stocké dans la première passerelle.

L'invention permet ainsi à une première passerelle utilisant une adresse IP partagée de transmettre des données vers une deuxième passerelle, le port source utilisé dans les paquets de données transmis étant compris dans une plage de ports allouée à ladite première passerelle.

L'identifiant d'une plage de ports associé à la première passerelle peut correspondre, par exemple, à un nombre entier positif identifiant une plage de ports allouée à la première passerelle.

Par ailleurs, dans un mode de réalisation particulier, le procédé de transmission de données comprend en outre :

- une étape de réception par la première passerelle d'un deuxième paquet de données provenant de ladite application distante ;
- une deuxième étape de détermination par la première passerelle pour déterminer, à partir de l'identifiant associé à la deuxième passerelle et d'un numéro de port source initialement inclus dans le deuxième paquet de données reçu, un numéro de port source à utiliser pour transmettre le deuxième paquet vers une application déterminée d'un réseau local accessible par la première passerelle,
- une étape de remplacement par la première passerelle d'un numéro de port source initialement inclus dans ledit deuxième paquet de données par le numéro de port source déterminé lors de la deuxième étape de détermination.

L'invention permet ainsi avantageusement à la première passerelle de transmettre un deuxième paquet de données provenant de la deuxième passerelle vers l'application cible avec comme numéro de port source le port par défaut du service accédé par ladite application.

Dans un mode particulier de réalisation, les différentes étapes du procédé de transmission de données sont déterminées par des instructions de programmes d'ordinateurs.

En conséquence, l'invention vise aussi un programme d'ordinateur sur un support d'informations, ce programme étant susceptible d'être mis en ouvre dans une passerelle, ce programme comportant des instructions adaptées à la mise en oeuvré des étapes d'un procédé de transmission de données selon l'un des modes de réalisation décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

L'invention vise également un procédé de transmission d'un premier paquet de données à partir d'une passerelle vers un serveur d'un réseau local accessible via la passerelle, le procédé comprenant :

- une étape préliminaire de stockage d'un identifiant d'une plage de ports associé à la passerelle,

- une étape de détermination, à partir de l'identifiant et d'un numéro de port de destination initialement inclus dans le premier paquet de données, du numéro de port de destination du serveur vers lequel le premier paquet de données doit être transmis, et
- une étape d'envoi dudit premier paquet de données audit numéro de port de destination du serveur.

L'identifiant peut correspondre, par exemple, à un nombre entier positif identifiant une plage de ports allouée à la passerelle.

Dans une mise en oeuvre particulière, l'identifiant est un nombre entier positif I et le numéro de port de destination déterminé par la passerelle est égal à un numéro de port de destination initialement inclus dans le premier paquet de données, ce numéro initial étant décrémenté de $(I \cdot N)$ ports, N étant un nombre entier prédéterminé.

Dans un mode de réalisation particulier, le procédé de transmission comprend en outre :

- une étape de réception par la passerelle d'un deuxième paquet de données envoyé par le serveur en réponse au premier paquet de données reçu par le serveur,
- une étape de détermination, à partir de l'identifiant, d'un numéro de port source à transmettre avec le deuxième paquet de données, et
- une étape d'envoi du deuxième paquet de données à partir du numéro de port source ainsi déterminé.

La deuxième passerelle est ainsi capable d'envoyer un deuxième paquet de données vers la première passerelle en utilisant un numéro de port source compris dans une plage de ports qui lui est allouée.

Dans un mode particulier de réalisation, les différentes étapes du procédé de transmission de données décrit ci-dessus sont déterminées par des instructions de programmes d'ordinateurs.

En conséquence, l'invention vise aussi un programme d'ordinateur sur un support d'informations, ce programme étant susceptible d'être mis en oeuvre dans une passerelle, ce programme comportant des instructions adaptées à la mise en oeuvre des étapes d'un procédé de transmission de données selon l'un des mode de réalisation décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

On notera que les avantages et commentaires énumérés en référence aux différents modes de réalisation du procédé de gestion d'une requête DNS et aux procédés de transmission de données s'appliquent de manière analogue aux différents modes de réalisation du serveur DNS et des passerelles de l'invention.

L'invention concerne par ailleurs un serveur DNS configuré pour traiter une requête DNS, le procédé comprenant :

- des moyens de réception d'une requête DNS pour accéder à une application distante accessible via une passerelle, et
- des moyens d'envoi d'une réponse DNS comprenant l'adresse IP de la passerelle,

le serveur DNS étant caractérisé en ce qu'il comprend en outre :

- des moyens de vérification pour déterminer si un identifiant d'une plage de ports est stocké dans le serveur DNS en association avec l'adresse IP de la passerelle, et
- des moyens d'insertion configurés pour insérer, lorsque le résultat de la vérification est positif, l'identifiant dans la réponse DNS avant l'envoi de la réponse DNS.

L'invention concerne aussi une passerelle configurée pour transmettre des données vers une seconde passerelle, la passerelle comprenant :

- des moyens de détermination, à partir d'un identifiant d'une plage de ports associé à l'adresse IP de la seconde passerelle, du numéro de port de destination vers lequel les données doivent être transmises, et
- des moyens d'envoi des données au numéro de port de destination.

En outre, l'invention concerne une passerelle configurée pour transmettre des données vers un serveur d'un réseau local accessible via la passerelle, la passerelle comprenant :

- des moyens de stockage d'un identifiant d'une plage de ports associé à la passerelle,
- des moyens de détermination, à partir de l'identifiant, du numéro de port de destination du serveur vers lequel des données doivent être transmises, et
- des moyens d'envoi des données au numéro de port de destination.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un environnement mettant en oeuvre de manière connue un serveur DNS et des passerelles ;
- la figure 2 représente, de façon schématique, un environnement similaire à celui illustré en figure 1 dans lequel sont illustrés un serveur DNS et des passerelles conformes à l'invention ainsi que les étapes du procédé de gestion d'une requête DNS et des procédés de transmission conformes à l'invention ;
- la figure 3 représente, un exemple de segmentation de l'espace de ports associé à une adresse IP partagée en plusieurs plages de ports et sous-ensembles de plages de ports, et ce conformément à un mode de réalisation particulier de l'invention ; et
- la figure 4 représente, de manière schématique, un exemple de conversion de numéros de ports conforme à l'invention.

Rescription détaillée d'un mode de réalisation

L'invention concerne l'échange de données entre des applications distantes via un réseau de communication tel qu'Internet. On notera cependant que l'invention peut s'appliquer à d'autres types de réseau de communication, tel qu'aux réseaux mobiles de type UMTS, par exemple (pour « *Universal Mobile Télécommunication System* »).

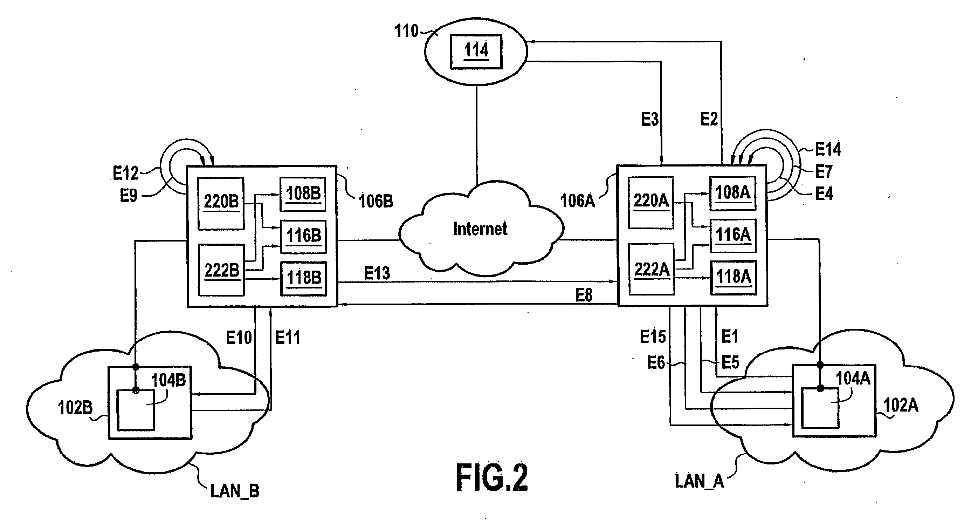

La figure 2 représente un environnement similaire à celui illustré en figure 1. Plus précisément, une passerelle d'accès 106A est placée en coupure de flux entre un réseau local LAN_A et Internet, le réseau local LAN_A comprenant un terminal 102A dans lequel est mise en oeuvre un client applicatif 104A. De même, une passerelle d'accès 106B est placée en coupure de flux entre un réseau local LAN_B et Internet, le réseau local LAN_B comprenant un serveur 102B mettant en oeuvre un service applicatif 104B. Dans l'exemple considéré ici, les applications 104A et 104B sont respectivement un navigateur Web et un serveur Web.

Dans exemple envisagé ici, les passerelles 106A et 106B ont l'architecture matérielle de passerelles classiques. Elles comportent notamment un processeur, une mémoire vive de type RAM, une mémoire morte de type ROM et une mémoire non volatile.

La mémoire morte constitue un support d'enregistrement conforme à l'invention sur lequel peut être enregistré un programme d'ordinateur conforme à l'invention, comportant des instructions pour l'exécution des étapes d'un des procédés de transmission de l'invention (ces procédés seront décrits plus en détail ultérieurement).

Les passerelles 106A et 106B comportent également des moyens de communication avec les terminaux ou serveurs de leur réseau local respectif d'une part, et avec Internet d'autre part.

Une adresse locale *AdresPriv_TA* unique dans le réseau locale LAN_A est attribuée par la passerelle 106A au terminal 102A. De même, une adresse locale *AdresPriv_SB* unique dans le réseau local LAN_B est attribuée par la passerelle 106B au serveur 102B.

D'autre part, les passerelles 106A et 106B possèdent chacune une adresse IP publique, notée respectivement *AdresPub_A* et *AdresPub_B,* leur permettant de transmettre des données provenant de leur réseau local respectif vers Internet, et *vice versa.* Les adresses publiques *AdresPub_A* et *AdresPub_B* sont des adresses partagées, ce qui signifie que d'autres passerelles (ou d'autres types d'équipements connectés à Internet) sont susceptibles d'utiliser les mêmes adresses publiques pour communiquer via Internet. Dans la plupart des cas, les adresses *AdresPub_A* et *AdresPub_B* sont différentes, mais on peut envisager le cas où ces adresses sont identiques.

On considère ici l'exemple dans lequel 65536 ports distincts sont utilisables pour une même adresse IP publique.

Ces ports sont alloués sous forme de plages de ports aux différents clients (passerelles etc.) identifiés sous une même adresse IP publique.

Traditionnellement, les ports numérotés de 0 à 1023 sont considérés comme « ports connus » (« *well known ports»*) par l'IANA. Un port est dit connu lorsqu'il est affecté par défaut à une application connue, c'est-à-dire une application reconnue et normalisée par L'IANA. Par exemple, le port 80 est le numéro de port dédié au protocole HTTP et le port 21 est celui utilisé pour le protocole FTP.

Dans cet exemple, on considère que tous les équipements utilisant les adresses IP publiques partagées *AdresPub_A* et *AdresPub_B* disposent d'une plage de ports de même taille, à savoir une plage de N ports distincts (N étant un entier positif). On pourrait cependant envisager le cas où les différentes plages de ports d'une même adresse IP partagée présentent des tailles différentes.

N est donc choisi de manière à ce que le nombre total de ports distincts (à savoir 65536 dans le cas présent) soit divisible par N. Dans cet exemple, il existe donc 65536/N plages de ports distinctes attribuables pour une adresse publique partagée donnée.

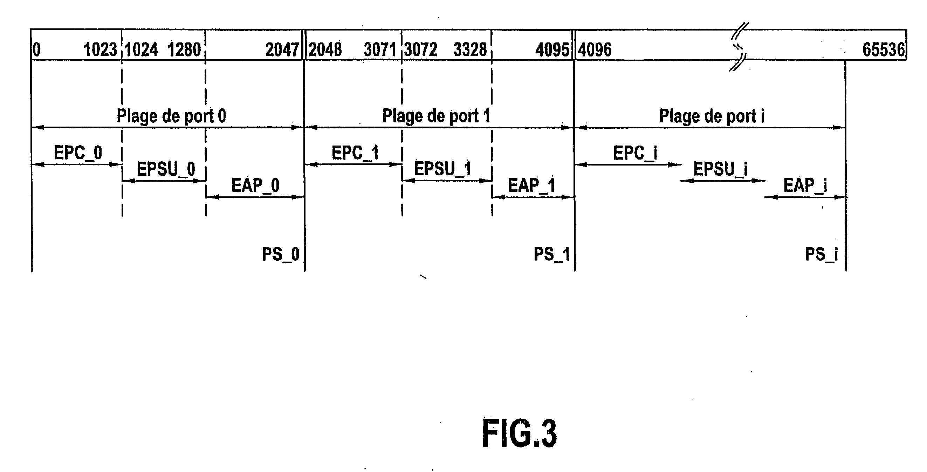

La figure 3 représente la segmentation en plages de ports et en sous-ensembles de plages de ports des 65536 ports disponibles pour les adresses *AdresPub_A* et *AdresPub_B* de l'exemple considéré.

On considère tout d'abord le nombre entier i représentant un numéro de plage de ports alloué à une passerelle. Le nombre i est tel que :

$$0 \le i < i_{max} = 65536/N$$

De plus, si l'on considère le nombre entier $m$ représentant un numéro de port dans une plage de ports i donnée, alors $m$ respecte la condition suivante :

$$i.N \le m < i.(N+1)$$

Dans l'exemple de la figure 3, on considère le cas où les ports sont partagés en 32 plages disjointes de 2048 ports chacune (N=2048 et $i_{max}$=31).

D'autre part, on désigne par *EPC_i* le sous-ensemble de ports dans la plage i tel que, quelque soit le numéro de port $m$ dans ce sous ensemble, $m$ respecte la condition suivante :

$$(i.N) \le m < 1024 + (i.N)$$

Comme illustré en figure 3, *EPC_i* correspond à l'ensemble de ports [0 à 1023] (i.e. *EPC_0*) décalé d'un nombre de ports égal à (i·*N*). Il n'y a donc pas de décalage pour *EPC_0* (i=0).

Le sous-ensemble *EPC_i* correspond aux ports connus utilisés dans le cadre d'applications considérées comme connues par l'IANA décalés de (*i*.N).

On désigne également par *EPSU_i* un sous-ensemble de ports dits « ports spécifiques » dans la plage i, ce sous-ensemble satisfaisant la condition suivante :

$$1024 + (i.N) \le m < 1024 + EPSUL + (i.N)$$

où *EPSUL* est le nombre de ports contenus dans ce sous-ensemble de ports spécifiques.

Le sous-ensemble *EPSUL_i* correspond à l'ensemble de ports [1024, 1023 + *EPSUL*] (i.e. *EPSUL_0)* décalé d'un nombre de ports égal à (*i·N).* Il n'y a donc pas de décalage pour le sous-ensemble *EPSU_0* (i=0).

Les ports spécifiques sont utilisés en relation avec des applications spécifiques qui sont propres à l'environnement considéré.

Dans l'exemple de la figure 3, on choisi *EPSUL* = 256 ports. On comprendra cependant que d'autres valeurs peuvent être attribuées à *EPSUL*.

De plus, on désigne par *PS_i* le numéro de port correspondant au dernier port de la plage i, à savoir le numéro de port $m = (i·(N+1))-1$. Pour *PS_0,* en particulier, il n'y a pas de décalage (i=0).

Enfin, on désigne par *EAP_i* le sous-ensemble de la plage i comprenant tous les ports situés en dehors des sous-ensembles *EPC_i, EPSU_i* et *PS_i.* En d'autres termes, l'*EAP_i* correspond au sous-ensemble de ports satisfaisant la condition suivante :

$$1024 + EPSUL + (i \cdot N) \leq m < (i \cdot (N+1)) - 1$$

L'ordre de répartition des sous-ensembles *EPC_i, EPSU_i, EAP_i* et *PS_i* illustré en figure 3 n'est qu'un mode de réalisation particulier de l'invention. On peut en effet envisager de disposer ces sous-ensembles de ports dans un ordre différent. Par exemple, on pourra arranger les sous-ensembles dans l'ordre successif suivant : *EPC_i, PS_i, EPSU_i, EAP_i*.

On note toutefois qu'il est préférable de placer le sous-ensemble *EPC_i* au début de la plage i afin de faciliter la mise en oeuvre de l'invention.

D'autre part, dans l'exemple envisagé ici, le serveur DNS 110 a l'architecture matérielle d'un ordinateur. Il comporte notamment un processeur, une mémoire vive de type RAM, une mémoire morte de type ROM et une mémoire non volatile.

La mémoire morte constitue un support d'enregistrement conforme à l'invention, lisible par le serveur DNS 110, et sur lequel est enregistré un programme d'ordinateur conforme à l'invention, comportant des instructions pour l'exécution des étapes d'un procédé de gestion d'une requête DNS selon l'invention. Les principales étapes de ce procédé sont décrites plus en détail ultérieurement.

Le serveur DNS 110 comporte également des moyens de communication avec Internet.

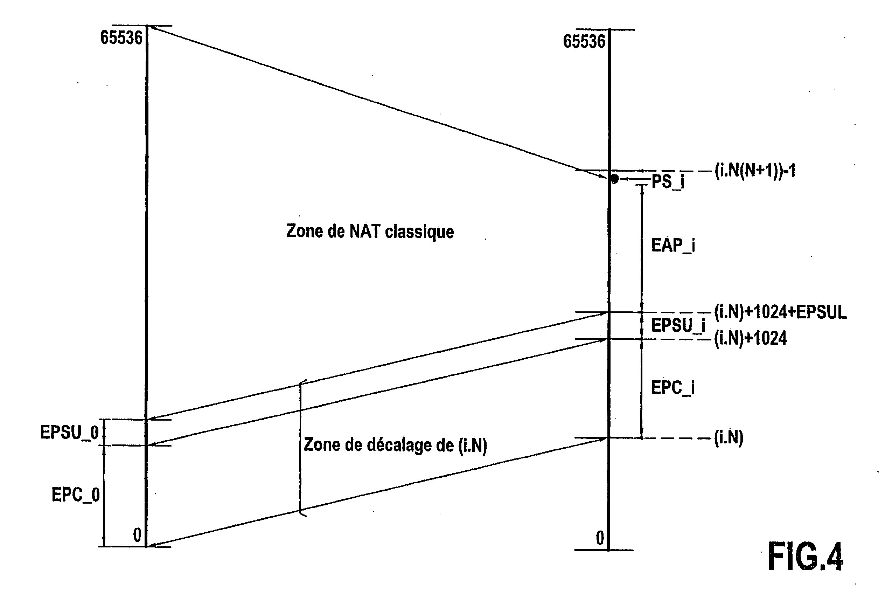

Une mise en oeuvre particulière de l'invention est à présent décrite en référence aux figures 2, 3 et 4. On considère plus particulièrement l'environnement de la figure 2 dans lequel les adresses publiques partagées *AdresPub_A* et *AdresPub_B* sont segmentés en plages et en sous-ensembles de ports conformément à l'exemple illustré en figure 3, avec N=2048, *EPSUL*=256 et $0 \leq i \leq 31$.

Par ailleurs, dans l'exemple considéré ici, les passerelles 106A et 106B disposent des deux informations suivantes :

- l'adresse publique partagée qui leur a été attribuée, à savoir *AdresPub_A* et *AdresPub_B*, respectivement, et
- l'identifiant d'une plage de ports qui leur a été attribué, à savoir *i_A* et *i_B,* respectivement.

Dans ce mode de réalisation, les deux informations ci-dessus sont enregistrées sous la forme d'une entrée *(AdresPub,* i) dans une table *Table4dresPlages* contenue dans chacune des passerelles. Plus particulièrement, on note 116A la table *TableAdresPlages* contenue dans la passerelle 106A, cette table comprenant notamment l'entrée *(AdresPub_A, i_A).* De même, la table *TableAdresPlages* 116B contenue dans la passerelle 106B comprend l'entrée *(AdresPub_B, i_B).*

En revanche, dans le cadre de l'invention, le terminal 102A et le serveur 102B n'ont pas besoin de connaître la plage de ports attribuée à leur passerelle respective. Le terminal 102A et le serveur 102B ne tiennent pas compte du numéro de la plage de ports attribuée à leur passerelle respective.

La passerelle 106A comprend également une table notée 118A pour permettre de stocker le port local utilisé par l'application 104A en association avec l'adresse locale *AdresPriv_TA* du terminal 102A. De manière analogue, la passerelle 106B comprend une table 118B permettant de stocker le port local utilisé pour le service applicatif 104B en association avec l'adresse locale *Adres_SB* du serveur 102B.

Les autres éléments constituant les passerelles 106A et 106B seront décrits plus en détail ultérieurement.

On considère à présent le cas où le client applicatif 104A tente de communiquer avec le service applicatif 104B. Dans cet exemple, le fonctionnement de l'invention est identique lorsque le service 104B est une application « connue » ou « spécifique ».

Lorsque le navigateur Web du terminal 102A souhaite accéder au serveur Web distant 104B, il envoie tout d'abord une requête DNS au serveur DNS 110 (étape E1). Cette requête DNS comprend un nom de domaine (« *Fully Qualified Domain Name* ») associé au serveur Web 104B (envoi de l'URL www.abcdef.ghi, par exemple).

La passerelle 106A placée en coupure de flux entre le terminal 102A et Internet reçoit alors la requête DNS et transmet celle-ci au serveur DNS 110 (étape E2).

Une fois la requête DNS reçue, le serveur DNS 110 consulte une table interne 114 afin de déterminer l'adresse IP publique *AdresPub_B* de la passerelle associée à l'application 104B.

Une fois l'adresse *AdresPub_B* déterminée, le serveur DNS 110 construit une réponse DNS destinée à la passerelle 106A, réponse comprenant cette adresse publique.

En outre, avant d'envoyer la réponse DNS, le serveur DNS 110 vérifie également si un numéro de plage de ports *i_B* lié à la passerelle 106B est stocké en association avec l'adresse IP publique de la passerelle 106B. Si tel est le cas, le serveur DNS insert le numéro de plage de ports *i_B* dans la réponse DNS à envoyer à la passerelle 106A. Une telle insertion peut se faire, par exemple, en utilisant la fonctionnalité SRV décrite précédemment.

On considère ici le cas où le résultat de la vérification est positif et où le serveur DNS 110 envoie à la passerelle 106A une réponse DNS comprenant *AdresPub_B* et *i_B* (étape E3)

Une fois cette réponse DNS reçue, la passerelle 106A vérifie si un numéro de plage de ports *i_B* est inclut dans la réponse (étape E4). Si tel est le cas, la passerelle 106A enregistre dans sa table *TableAdresPlages* 116A l'entrée *(AdresPub_B, i_B)*. En outre, la passerelle 106A transmet au terminal 102A un message contenant l'adresse IP publique *AdresPub_B* fournie par le serveur DNS (étape E5). En revanche, ce message ne contient pas le numéro de plage de ports *i_B* fourni par le serveur DNS 110. Les avantages résultant de l'absence du numéro *i_B* dans ce message seront détaillées ultérieurement.

Dans cet exemple, le traitement des requêtes DNS et des réponses DNS est réalisé par un module de traitement DNS 220A, ce dernier faisant appel à la table *TableAdresPlages* 116A.

Une fois l'adresse IP publique *AdresPub_B* de la passerelle 106B reçue, le client applicatif 104A peut communiquer avec le service applicatif 104B. Pour ce faire, le terminal 102A envoie un premier paquet de données à destination du serveur 102B (étape E6). Ce paquet de données comprend :

- une adresse source correspondant à l'adresse locale *AdresPriv_TA* du terminal 102A ;
- un port source correspondant au port source *Port_TA* utilisé par l'application 104A ;
- une adresse de destination correspondant à l'adresse IP publique *AdresPub_B* de la passerelle 102B ; et
- un port de destination correspondant au port *Port_DestParTA* associé à l'application 104B.

Lorsque l'application à atteindre est considérée comme connue, c'est-à-dire une application dont le port associé est compris entre 0 et 1023 (sous-ensemble *EPC_0),* le port *Port_DestParTA* utilisé par l'application 104A correspond au port par défaut associé à cette application. Par exemple, dans le cas où les applications 104A et 104B sont respectivement un navigateur Web et un serveur Web, le navigateur Web choisit le port de destination par défaut HTTP, à savoir le port 80.

De manière analogue, lorsque l'application à atteindre est une application dite spécifique, l'application 104A choisit un port de destination *Port_DestParTA* part défaut associé à cette application. Ce port est donc compris dans le sous-ensemble *EPSU_0,* c'est-à-dire dans l'intervalle [1024, 1023 + *EPSUL*].

A noter que dans certains cas, le premier paquet de données ne contient pas de port de destination vers lequel le paquet doit être envoyé. Ceci est le cas, par exemple, lorsque le terminal 102A envoie un paquet ICMP/Ping vers le serveur 102B.

Lorsque la passerelle 106A reçoit le premier paquet de données, celle-ci vérifie dans sa table interne *TableAdresPlages* 116A si une entrée *(AdresPub_B, i_B)* existe (étape E7). Si aucune entrée de ce type n'existe, la passerelle 106A considère que la passerelle 106B ne possède pas une adresse IP publique partagée. En conséquence, la passerelle 106A ne modifie pas le port de destination *Port_DestParTA* compris dans le premier paquet de données.

Si, en revanche, une telle entrée est présente dans la table *TableAdresPlages* 116A, la passerelle 106A détermine un nouveau port de destination *PortPub_B* vers lequel le premier paquet de données doit être envoyé (étape E7).

Pour déterminer *PortPub_B,* la passerelle 106A vérifie tout d'abord si un numéro de ports de destination *Port_DestParTA* (dit numéro initial de port de destination) est inclus dans le premier paquet de données.

Si tel est le cas, la passerelle 106A remplace le port de destination *Port_DestParTA* initialement inclus dans le paquet de données par un nouveau port de destination *PortPub_B.* Ce nouveau port de destination correspond au port public affecté par la passerelle 106B à l'application 104B. Dans l'exemple considéré ici, le port de destination *PortPub_B* substituant le port *Port_DestParTA* est calculé de la manière suivante :

- si $0 \leq$ *Port_DestParTA* < 1024 + *EPSUL,* c'est à-dire si le port destination du paquet émis par le terminal 102A est un port connu (dans l'EPC_0) ou un spécifique (dans l'EPSU_0), alors :

$$PortPub\_B = Port\_DestParTA + (i\_B \cdot N)$$

En d'autres termes, le numéro de port de destination du paquet de données est incrémenté de *(i_B.• N)* ports afin d'être décalé dans l'*EPC_i_B* ou dans l'*EPSU_i_B,* selon le cas.

- si 1024 + *EPSUL* $\leq$ *Port_DestParTA,* alors la passerelle 106A détermine si sa table NAT 108A contient une entrée associant le port *Port_DestParTA* à un numéro de port public. Dans le cas présent, il s'agit du premier paquet émis par le client applicatif 104A vers le service 104B de sorte qu'une telle entrée NAT ne peut être présente dans la table NAT 108A. Par conséquent, ce cas n'est pas considéré dans le cas présent.

En outre, si la passerelle 106A détermine qu'aucun numéro de port de destination *Port_DestParTA* n'est initialement inclus dans ce premier paquet de données (cas d'un paquet ICMP/Ping, par exemple), mais qu'une entrée (*AdresPub_B, i_B)* est bien présente dans la *TableAdresPlages116A,* la passerelle 106A procède à l'encapsulation du paquet de données dans un nouveau paquet de données (typiquement IP/UDP) ayant pour port de destination un port public *PortPub_B tel* que :

$$PortPub\_B = PS\_0 + (i\_B \cdot N)$$

En d'autres termes, le port spécial *PS_0* utilisé par défaut pour transmettre les paquets dépourvus de port de destination est incrémenté de (*i_B·N*) ports afin de devenir le port *PS_i_B* dans la plage de ports *i_B.*

Les opérations de traitement décrites ci-dessus concernant le port de destination du premier paquet de données sont réalisées par le module de traitements de données 222A compris dans la passerelle 106A, ce module faisant appel à la table *TableAdresPlages* 116A.

Par ailleurs, la passerelle 106A ne modifie pas l'adresse de destination du premier paquet de données, à savoir l'adresse *AdresPub_B.*

En outre, la passerelle 106A remplace l'adresse source locale *AdresPriv_TA* compris dans le premier paquet de données par l'adresse publique *AdresPub_A* de la passerelle 106A.

La passerelle 106A vérifie également si un port source *Port_TA* est inclus dans le premier paquet de données, ce port étant le port local utilisé par le client applicatif 104A pour atteindre l'application 104B.

Si tel est le cas, la passerelle 106A remplace le port source *Port_TA* initialement inclus dans le paquet de données par un nouveau port source *PortPub_A.* Ce nouveau port source correspond au port public affecté par la passerelle 106A à l'application 104A. Dans l'exemple considéré ici, le port de destination *PortPub_A* substituant le port *Port_TA* est calculé de la manière suivante :

- si $0 \le Port\_TA < 1024 + EPSUL,$ c'est-à-dire si le port source du paquet émis par le terminal 102A est un port connu (dans \'*EPC_0)* ou un port spécifique (dans l'*EPSU_0),* alors :

$$PortPub\_A = Port\_TA + (i\_A \cdot N)$$

En d'autres termes, le numéro de port du paquet de données est incrémenté de (*i_A·N*) ports afin d'être décalé dans l'*EPC_i_A* ou dans l'*EPSU_i_A,* selon le cas.

En outre, la passerelle 106A crée une entrée (*Adres_TA, Port_TA)* dans sa table *TableAdresPrivPort* 118A (figure 2). Cette table renseigne sur le lien entre les ports locaux situés dans le sous-ensemble *EPC_0* ou *EPSU_0* qui sont utilisés dans le réseau local LAN_A, et les adresse IP locales des terminaux locaux utilisant ces ports locaux. A noter que dans l'exemple décrit ici, une entrée (*Adres_TA, Port_TA)* est créée dans la table *TableAdresPrivPort* 118A car le client applicatif 104A déclare pour la première fois à la passerelle 106A qu'il utilise le port *Port_TA.* Si, en revanche, une entrée *(Adres_TA, Port_TA)* est déjà présente dans la table *TableAdresPrivPort* 118A, aucune entrée supplémentaire n'est créée.

Par ailleurs, le calcul de *Port_TA* dans ce cas est traité de la même manière que si le terminal 102A était un serveur (comme le serveur 102B, par exemple). Cette uniformisation du mode de fonctionnement est avantageuse en ce que les passerelles peuvent traiter le port source d'un paquet de données de la même manière vis-à-vis d'un paquet envoyé par un terminal et vis-à-vis d'un paquet envoyé par un serveur.

- si $1024 + EPSUL \le Port\_TA,$ alors la passerelle 106A consulte sa table NAT 108A, de sorte que :

  1. si une entrée NAT classique du type (*Adres_TA, Port_TA, AdresPub_A, PortPub_A)* existe déjà dans la table NAT 108A, alors la passerelle 106A réutilise de manière classique cette entrée pour déterminer *AdresPub_A* et *PortPub_A;*
  2. sinon, une nouvelle entrée NAT classique du type (*Adres_TA, Port_TA, AdresPub_A, PortPub_A)* est créée dans la table NAT 108A de la passerelle 106A, le port public *PortPub_A* étant choisi dans la plage de ports *EAP_i_A* de la plage de ports i_A (plage de ports allouée à la passerelle 106A).

Si, en revanche, la passerelle 106A détermine lors de sa vérification qu'aucun port source *Port_TA* n'est inclus dans le premier paquet de données (cas d'un paquet ICMP/Ping par exemple), alors celle-ci procède à l'encapsulation du paquet de données dans un nouveau paquet (typiquement IP/UDP). Le port source public *PortPub_A* du paquet encapsulant est typiquement choisi dans le sous-ensemble *EAP_i_A*. L'entrée (*Adres_TA, PS_0, AdresPub_A, PortPub_A)* est alors placée dans la table NAT 108A, *PS_0* n'ayant ici qu'une valeur de simple indication pour signaler la nature sans port du paquet de données envoyé. Comme décrit plus en détail ultérieurement, si la passerelle 106A reçoit en réponse un deuxième paquet de données avec, comme port de destination, le port source public *PortPub_A* de l'entrée NAT ci-dessus, la réponse est transmise par la passerelle 106A au terminal *TA*.

Dans ce mode de réalisation, le traitement du port source est réalisé par le module de traitement des données 222A qui fait appel aux tables *TableAdresPlages* 116A, *TableAdresPrivPort* 118A et/ou à la table NAT 108 selon les cas décrits ci-dessus.

Le premier paquet de données est ensuite transmis par la passerelle 106A et reçu par la passerelle 106B (étape E8).

Une fois le premier paquet reçu, la passerelle 106B traite le port source *PortPub_A* inclus dans le paquet en consultant sa table *TableAdresPlages* 116B afin de déterminer si cette table comprend une entrée (*AdresPub_A, i_A)* (étape E9).

Si une telle entrée est déjà présente dans la table *TableAdresPlages* 116B, cela signifie que l'application 104A a déjà fait l'objet, par exemple, d'une recherche DNS de la part de la passerelle 106B. Ce cas n'est donc pas envisagé ici puisque l'émetteur du premier paquet de données est un client applicatif (un navigateur Web) cherchant à accéder à un serveur Web hébergé sur le serveur 102B.

Si, en revanche, une entrée *(AdresPub_A, i_A)* n'est pas présente dans la table *TableAdresPlages* 116B (comme c'est le cas dans l'exemple présent), la passerelle 106B ne peut déterminer si la passerelle 106A à l'origine du paquet de données est une passerelle à adresse IP partagée conforme à l'invention. En conséquence, la passerelle 106B ne modifie pas ici le port source *PortPub_A* inclus dans le premier paquet de données.

D'autre part, la passerelle 106B remplace l'adresse de destination publique *AdresPub_B* et le port public *PortPub_B* par l'adresse locale *Adres_SB* et le port local *Port_SB,* respectivement. L'adresse locale *Adres_SB* et le port local *Port_SB* sont déterminés de la manière suivante :

- si $0 \leq PortPub\_B-(i\_B \cdot N) < 1024+EPSUL,$ c'est-à-dire si le port *PortPub_B* est un port du sous-ensemble *EPC_i_B ou EPSU_i_B* de la plage i_B, alors :

$$Port\_SB = PortPub\_B - (i\_B \cdot N)$$

En d'autres termes, le port de destination *PortPub_B* inclus initialement dans le premier paquet de données est décrémenté de (*i_B·N)* ports de manière à être ramené dans le sous-ensemble *EPC_0* ou *EPSU_0* selon le cas. La passerelle 106B consulte alors sa table *TableAdresPrivPort*118B et récupère l'entrée (*Adres_SB, Port_SB)* présente dans cette table. A partir du numéro de port *Port_SB*, la passerelle détermine l'adresse de destination locale *Adres_SB* correspondante pour atteindre l'application 104B.

- si *PortPub_B-(i_B·N)=PS_*0, alors il s'agit d'un paquet de données encapsulant un paquet d'origine sans port (ICMP/Ping, par exemple). La passerelle 106B décapsule alors le paquet et procède au traitement adéquat à ce type de paquet.

- si *PortPub_B-(i_B·N)≥1024+EPSUL,* c'est-à-dire si *PortPub_B* se situe dans le sous-ensemble *EAP_i_B,* alors la passerelle 106B vérifie si une entrée NAT traditionnelle du type *(Adres_SB, Port_SB, AdresPub_B, PortPub_B)* existe dans la table NAT 108B. Si une telle entrée NAT existe, celle-ci est utilisée pour déterminer l'adresse locale *Adres_SB* et le port local *Port_SB* vers lesquels le premier paquet de données doit être envoyé pour atteindre l'application 104B. Si, en revanche, aucune entrée NAT de ce type n'existe dans la table 108B, la passerelle 106B ne transmet pas le premier paquet de données vers l'application 104B, le paquet de données étant alors rejeté.

Les opérations décrites ci-dessus concernant le traitement du port de destination et de l'adresse de destination du premier paquet de données reçu par la passerelle 106B sont effectuées par le module de traitement de données 222B qui fait appel aux tables *TableAdresPlages* 116B, *TableAdresPrivPort* 118B et/ou à la table NAT 108A selon le cas.

Une fois le traitement des ports et des adresses effectué, la passerelle 106B transmet le premier paquet de données sur le port *Port_SB* du serveur 102B (étape E10), l'adresse IP locale du serveur 102B étant *Adres_SB*.

Le serveur reçoit ainsi le premier paquet de données qui est traité par l'application 104B. En réponse, l'application 104B envoie un deuxième paquet de données à destination du client applicatif 104A (étape E11). Le deuxième paquet de données comprend :

- une adresse source *Adres_SB* propre au serveur 102B,
- un port source *Port_SB* propre à l'application 104B,
- une adresse de destination *AdresPub_A* correspondant à l'adresse IP publique de la passerelle 106A, et
- un port de destination *PortPub_A* correspondant au port affecté par la passerelle 106A à l'application 104A.

Une fois ce deuxième paquet de données reçu, la passerelle 106B traite le port de destination *PortPub_A* en consultant sa table *TableAdresPlages* 116B afin de déterminer si une entrée du type *(AdresPub_A, i_A)* existe.

Si une telle entrée n'est pas présente dans la table *TableAdresPlages* 116B, la passerelle 106B considère qu'aucun traitement n'est à réaliser concernant le port de destination. En conséquence, la passerelle 106B ne modifie pas le port de destination *PortPub_A* inclus dans le deuxième paquet de données, ce port correspondant au port public que la passerelle 106A a affecté à l'application 104A.

La passerelle 106B ne modifie pas non plus l'adresse de destination *AdresPub_A* correspondant à l'adresse publique de la passerelle 106A.

La passerelle 106B détermine en outre le port source public *PortPub_B* et l'adresse source publique *AdresPub_B* à partir desquels le deuxième paquet de données doit être envoyé.

Plus précisément, la passerelle 106B vérifie si un port source *Port_SB* est initialement inclus dans le deuxième paquet de données. Si tel est le cas, alors la passerelle 106B remplace l'adresse source locale *Adres_SB* et le port source local *Port_SB* par l'adresse source publique *AdresPub_B* et le port source public *PortPub_B,* respectivement. Le port source public *PortPub_B* est déterminé de la manière suivante :

- si $0 \leq Port\_SB < 1024+ EPSUL,$ c'est-à-dire si le port source *Port_SB* du deuxième paquet de données émis par le serveur 102B est un port connu situé dans le sous-ensemble *EPC_0* ou un port spécifique situé dans le sous-ensemble *EPSU_0,* alors :

$$PortPub\_B = Port\_SB + \left(i\_B \cdot N\right)$$

En d'autres termes, le port source *Port_SB* est incrémenté de $(i\_B \cdot N)$ ports afin d'être décalé dans le sous-ensemble *EPC_i_B* ou *EPSU_i_B* selon le cas.

En outre, la passerelle 106B consulte la table *TableAdresPrivPort* 118B afin de vérifier que l'entrée *(Adres_SB, Port_SB)* existe. Dans le cas présent, cette entrée existe, de sorte qu'aucune entrée supplémentaire n'est créée. Si en revanche cette entrée n'était pas présente dans la table *TableAdresPrivPort* 118B, celle-ci serait créée par la passerelle 106B.

- si $Port\_SB \geq 1024+EPSUL,$ alors la passerelle 106B détermine si une entrée NAT du type *(Adres_SB, Port_SB, AdresPub_B, PortPub_B)* existe dans la table NAT 108B. Si tel est le cas, la passerelle utilise cette entrée pour déterminer *AdresPub_B* et *PortPub_B.*

  Si, en revanche, aucune entrée de ce type n'existe dans la table NAT 108B, la passerelle 106B sélectionne un port public *PortPub_B* dans le sous-ensemble de ports *EAP_i_B* et crée une nouvelle entrée NAT du type *(Adres_SB, Port_SB, AdresPub_B, PortPub_B)* dans la table NAT 108B. Le port public *PortPub_B* est alors affecté par la passerelle 106B à l'application 104B.

  Dans notre exemple, le cas $(Port\_SB \geq 1024+EPSUL)$ ne survient pas car le serveur 102B émet toujours avec un port dans le sous-ensemble *EPC_0* ou *EPSU_0.*

En revanche, si le premier paquet de données reçu encapsulait un paquet sans port, et qu'après traitement adéquat, la réponse à envoyer est également un paquet sans port (exemple réponse ICMP/PING), la passerelle 106B envoie alors le paquet de réponse en l'encapsulant dans un paquet ayant les caractéristiques suivantes:

- Adresse source = *AdresPub_B;*
- Port source = *PS_0 + (i_B·N)* ;
- Adresse de destination = *AdresPub_A ;* et
- Port de destination = port source *PortPub_A* du paquet encapsulant que la passerelle 106B a précédemment reçu.

Les opérations décrites ci-dessus concernant le traitement des ports et adresses du deuxième paquet de données sont réalisées par le module de traitement de données 222B qui fait appel aux tables *TableAdresPlages* 116B, *TableAdresPrivPort 118B* et/ou à la table NAT 108B selon le cas.

La passerelle 106B transmet ainsi le deuxième paquet de données vers l'adresse publique de destination *AdresPub_A* au port de destination *PortPub_A* (étape E13).

Une fois le deuxième paquet de données reçu, la passerelle 106A traite le port source *PortPub_B* inclus dans ce paquet (étape E14). Pour ce faire, la passerelle 106A consulte sa table *TableAdresPlages* 116A afin de récupérer l'entrée (*AdresPub_B, i_B*).

Si aucune entrée de ce type n'existe dans la table *TableAdresPlages* 116A, la passerelle 106A ne peut déterminer si la passerelle 106B fonctionne avec une adresse publique partagée conformément à l'invention. Dans ce cas, la passerelle 106A ne modifie pas le port source *PortPub_B* inclus dans le deuxième paquet de données.

Si, en revanche, une entrée (*AdresPub_B, i_B*) existe dans la table *TableAdresPlages* 116A, la passerelle 106A remplace le port source *PortPub_B* inclus dans le deuxième paquet de données par le port source *PortSourChangé_B*, ce dernier étant déterminé de la manière suivante :

- si $0 \leq PortPub\_B-(i\_B \cdot N)<1024+EPSUL$, c'est-à-dire si le port source *PortPub_B* est situé dans le sous-ensemble *EPC_i_B* ou *EPSU_i_B*, alors :

$$PortSourChangé\_B = PortPub\_B-\left(i\_B \cdot N\right)$$

En d'autres termes, le numéro de port source inclus dans le deuxième paquet de données est décrémenté de ($i\_B \cdot N$) ports afin d'être ramené dans le sous-ensemble *EPC_0* ou *EPSU_0* selon le cas.

- si $PortPub\_B-(i\_B \cdot N) \geq 1024+EPSUL$, c'est-à-dire si le port source *portPub_B* est situé dans le sous-ensemble *EAP_i_B,* la passerelle 106A ne modifie pas le port source *PortPub_B*. Dans ce cas, *PortSourChangé_B=PortPub_B.* A noter que ce cas ne peut s'appliquer dans l'exemple considéré ici, car le deuxième paquet de données est émis par un serveur de sorte que le port source utilisé est nécessairement dans le sous-ensemble de ports *EPC_0* ou *EPSU_0*.

Si, en revanche, $PortPub\_B-(i\_B \cdot N)=PS\_0$, alors il s'agit d'un paquet IP/UDP encapsulant un paquet de données interne sans port (ICMP/Ping, par exemple). Le traitement d'un tel paquet est décrit plus en détail ci-dessous lors de l'examen du port de destination.

Les opérations décrites ci-dessus concernant le traitement du port source du deuxième paquet de données sont réalisées par le module de traitement de données 222A qui fait appel à la table *TableAdresPlages* 116A.

Par ailleurs, la passerelle 106A ne modifie pas l'adresse source *AdresPub_B* incluse dans le deuxième paquet de données.

En outre, la passerelle 106A détermine l'adresse locale de destination *Adres_TA* et le port local de destination *Port_TA* correspondant au client applicatif 104A vers lequel le deuxième paquet de données doit être transmis. Pour ce faire, la passerelle 106A vérifie le port local de destination *Port_TA* inclus dans le deuxième paquet de données.

La passerelle remplace alors l'adresse publique de destination *AdresPub_A* et le port public de destination *PortPub_A* par l'adresse locale *Adres_TA* et le port local *Port_TA,* respectivement, ceux-ci étant déterminés de la manière suivante :

- si $0 \leq PortPub\_A-(i\_A \cdot N)<1024+EPSUL$, c'est-à-dire si le port public de destination *PortPub_A* est situé dans le sous-ensemble *EPC_i_A* ou *EPSU_i_A*, alors :

$$Port\_TA = PortPub\_A-\left(i\_A \cdot N\right)$$

En d'autres termes, le numéro de port de destination *PortPub_A* initialement inclus dans le deuxième paquet de données est décrémenté de ($i\_A \cdot N$) ports afin de redevenir le port source *Port_TA* utilisé par l'application 104A. La passerelle 106A consulte également sa table *TableAdresPrivPort* 118A afin de récupérer l'entrée *(Adres_TA, Port_TA)* précédemment enregistrée. A partir de la valeur de *Port_TA*, la passerelle 106A détermine l'adresse IP locale *Adres_TA* du terminal 102A hébergeant l'application 104A.

- si $PortPub\_A-(i\_A \cdot N) \geq 1024+ EPSUL$, c'est-à-dire si le port public de destination *PortPub_A* est situé dans le sous-ensemble *EAP_i_A*, alors cela signifie qu'une entrée NAT classique du type (*Adres_TA, Port_TA, AdresPub_A, PortPub_A*) existe déjà dans la table NAT 108A. La passerelle utilise alors cette entrée pour déterminer *Adres_TA* et *Port_TA.* Si en particulier la valeur de *Port_TA* dans l'entrée NAT (*Adres_TA, Port_TA, AdresPub_A, PortPub_A)* est égale à *PS_0,* cela signifie que le deuxième paquet reçu était un paquet encapsulant un paquet sans port. Dans ce cas, la passerelle 106A décapsule et envoie le paquet sans port au terminal 102A (*Adres_TA*).

Si, en revanche, aucune entrée associant *AdresPub_A* et *PortPub_A* n'existe dans la table NAT 108A, alors la passerelle 106A rejette le deuxième paquet de données.

Les opérations décrites ci-dessus concernant le traitement des adresses et ports sont réalisées par le module de traitement de données 222A, ce module faisant appel aux tables *TableAdresPlages* 116A, *TableAdresPrivPort* 118A et/ou à la table NAT 108A selon le cas.

La passerelle 106A transmet ainsi le deuxième paquet de données au terminal 102A (étape E15). Dans le cas où le deuxième paquet de données comprend un port de destination, celui-ci est transmis sur le port local de destination *Port_TA* correspondant à l'application 104A.

En définitive, l'utilisation d'identifiants de plages de ports conformément à l'invention permet d'éliminer les limitations et inconvénients inhérents à la technique « port range » conventionnelle.

L'invention permet en particulier de masquer aux services applicatif et aux clients applicatifs les ports réels (i.e. les ports publics) utilisés par les passerelles intermédiaires.

Par exemple, l'invention est avantageuse en ce que le gestionnaire d'un serveur (tel que le serveur 102B) n'a pas besoin de connaître la plage de ports allouée à sa passerelle pour mettre en oeuvre un service applicatif.

Par exemple, lorsqu'un gestionnaire de serveur installe un serveur Web dans un réseau local LAN accessible via une passerelle, ce gestionnaire doit simplement déclarer à la passerelle l'adresse locale du serveur Web (adresse privée) ainsi que le port associé au serveur Web en question. Cette déclaration peut se faire manuellement par le gestionnaire du serveur au moyen, par exemple, d'une page Web spécifique hébergée par la passerelle. Cette déclaration peut également se faire automatiquement au moyen d'un client UPnP (profil IGD) qui est capable d'interagir avec un logiciel UPnP situé dans la passerelle afin de demander une configuration statique liant son port et son adresse locale. Les clients de type UPnP IGD sont très largement utilisés sur les terminaux et ordinateurs actuels pour déclarer une application auprès d'une passerelle.

L'invention est donc avantageuse en ce qu'elle permet d'utiliser des adresses IP publiques partagées sans modifier le fonctionnement des terminaux et serveurs conventionnels. En effet, l'invention ne nécessite aucune modification du fonctionnement d'un client de type UPnP. Un serveur mettant en oeuvre un serveur Web, par exemple, pourra utiliser son port défini par défaut (à savoir le port 80) sans avoir à tenir compte de la plage de ports allouée à sa passerelle. De même, un serveur mettant en oeuvre une application spécifique (dans le contexte de services professionnels ou d'entreprises par exemple) pourra utiliser son port défini par défaut sans tenir compte de la plage de ports allouée à la passerelle.

D'autre part, un terminal mettant en oeuvre un applicatif client n'a pas besoin d'être capable d'exploiter la fonctionnalité SRV pour atteindre une application placée derrière une passerelle disposant d'une adresse IP partagée. En effet, un applicatif client mis en oeuvre sur un terminal n'a pas besoin de connaître le port public à utiliser pour atteindre un service disponible sur un serveur distant. Le terminal en question ne tient pas non plus compte de la plage de ports allouée à sa passerelle. Le terminal hébergeant l'applicatif client se contente en fait d'utiliser le port défini par défaut pour atteindre le service en question.

Le masquage aux applicatifs clients et serveurs des ports publics utilisés par les passerelles est possible grâce à la mise en oeuvre de tables de type *TableAdresPlages* contenant au moins un lien entre une adresse IP partagée et un identifiant d'une plage de ports. Cet identifiant peut correspondre à la plage de ports allouée à la passerelle contenant la table *TableAdresPlages* en question ou peut correspondre à une plage de ports allouée à une autre passerelle accessible via un réseau de communication (tel qu'Internet, par exemple).

A noter qu'un identifiant de plage de ports peut être un numéro de plage, par exemple. Toutefois, d'autres types d'identifiant peuvent être envisagés.

L'invention permet également avantageusement de transporter des paquets de données dépourvus de port de destination (type ICMP) vers une passerelle ayant une adresse IP partagée. Ce cas s'applique notamment dans le cadre de l'envoi de paquets de type Ping.

Par ailleurs, lorsqu'une plage de ports est allouée à une passerelle, l'invention permet avantageusement d'utiliser une partie de cette plage (le sous-ensemble *EPA_i,* dans la description précédente) de manière classique au moyen d'une table NAT, et d'utiliser l'autre partie de cette plage conformément à l'invention (décalages des ports en fonction des identifiants de plages de ports associés aux passerelles mises en jeu).

De plus, une passerelle mettant en oeuvre un procédé de transmission selon l'invention est capable d'échanger des données avec une passerelle ne partageant pas d'adresse IP publique.

La présente invention peut s'appliquer dans divers contextes. Par exemple, l'invention peut s'appliquer à l'accès résidentiel à Internet. Ainsi, des clients disposant d'une passerelle conforme à l'invention peuvent accéder plus facilement à un service accessible via une passerelle distante dont l'adresse IP est une adresse partagée. En effet, le client n'aura pas besoin d'utiliser la fonctionnalité SRV ou d'accéder à une page Web intermédiaire pour atteindre le service recherché.

L'invention s'applique également aux serveurs mis en oeuvre dans des réseaux résidentiels. De tels serveurs sont de plus en plus utilisés dans des environnements résidentiels. Il est par exemple de plus en plus fréquent d'installer des serveurs multimédias ou domotiques dans des réseaux résidentiels, ces serveurs étant accessibles à distances par l'utilisateur.

L'invention peut s'appliquer aussi aux services professionnels, ces services pouvant faire appel à des ports spécifiques dans des réseaux locaux.

L'invention trouve également des applications particulières dans le contexte des services aux entreprises disposant d'un réseau local dans lequel des serveurs utilisent des adresses IP partagées (ce qui est typiquement le cas pour des petits sites professionnels).

**Revendications**

1.   Procédé de gestion d'une requête DNS réalisé par un serveur DNS (110), ledit procédé comprenant :

   - une étape (E2) de réception d'une requête DNS pour accéder à une application distante (104B) accessible via une passerelle (106B), et
   - une étape (E3) d'envoi d'une réponse DNS comprenant l'adresse IP de ladite passerelle,

   ledit procédé étant **caractérisé en ce qu'**il comprend en outre :

   - une étape de vérification pour déterminer si un identifiant d'une plage de ports est stocké dans ledit serveur DNS en association avec l'adresse IP de ladite passerelle, et
   - dans l'affirmative, une étape d'insertion dudit identifiant dans la réponse DNS avant l'envoi de ladite réponse DNS.

2.   Programme d'ordinateur comportant des instructions pour l'exécution des étapes du procédé de gestion d'une requête DNS selon la revendication 1 lorsque ledit programme est exécuté par un ordinateur.

3.   Support d'enregistrement lisible par un ordinateur sur lequel est enregistré un programme d'ordinateur comprenant des instructions pour l'exécution des étapes du procédé de gestion d'une requête DNS selon la revendication 1.

4.   Procédé de transmission de données dans une première passerelle (106A) vers une seconde passerelle (106B), ledit procédé comprenant :

   - une étape (E4) préliminaire de stockage dans la première passerelle d'un identifiant d'une plage de ports et de l'adresse IP associés à la seconde passerelle vers laquelle lesdites données doivent être transmises, ledit identifiant étant obtenu d'un serveur DNS (110) en réponse à une requête DNS conformément au procédé de la revendication 1,
   - une étape (E7) de détermination, à partir dudit identifiant, du numéro de port de destination vers lequel les données doivent être transmises, et
   - une étape (E8) d'envoi desdites données audit numéro de port de destination de la seconde passerelle.

5.   Procédé selon la revendication 4, l'étape de détermination comprenant en outre :

   - lorsqu'un numéro de port de destination est initialement inclus dans lesdites données, la détermination lors de l'étape de détermination du numéro de port de destination vers lequel les données doivent être transmises à partir de l'identifiant et du numéro initial de port de destination, et le remplacement du numéro initial de port de destination par ledit numéro de port de destination déterminé lors de l'étape de détermination, ou
   - lorsqu'aucun numéro de port de destination n'est initialement inclus dans lesdites données, l'encapsulation desdites données dans un paquet de données comprenant le port de destination déterminé lors de ladite étape de détermination.

6.   Procédé selon la revendication 4 à 5, ledit procédé comprenant en outre la transmission, avec lesdites données, d'un numéro de port source déterminé à partir d'un identifiant d'une plage de ports associé à la première passerelle, ledit identifiant étant stocké dans ladite première passerelle.

7.   Programme d'ordinateur comportant des instructions pour l'exécution des étapes du procédé de transmission de données selon l'une quelconque des revendications 4 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de transmission de données selon l'une quelconque des revendications 4 à 6.

9. Procédé de transmission d'un premier paquet de données à partir d'une seconde passerelle (106B) vers un serveur (102B) d'un réseau local (LAN_B) accessible via ladite seconde passerelle, ledit premier paquet de données ayant été transmis (E8) à ladite seconde passerelle par une première passerelle (106A) selon un procédé conforme à l'une des revendications 4 à 6,
ledit procédé comprenant :

- une étape préliminaire de stockage de l'identifiant d'une plage de ports associé à ladite seconde passerelle,
- une étape (E9) de détermination, à partir dudit identifiant et d'un numéro de port de destination initialement inclus dans le premier paquet de données, du numéro de port de destination du serveur vers lequel ledit premier paquet de données doit être transmis, et
- une étape (E10) d'envoi dudit premier paquet de données audit numéro de port de destination du serveur.

10. Procédé selon la revendication 9, ledit procédé comprenant en outre :

- une étape (E11) de réception par ladite seconde passerelle d'un deuxième paquet de données envoyé par le serveur (102B) en réponse audit premier paquet de données,
- une étape (E12) de détermination, à partir dudit identifiant, d'un numéro de port source à transmettre avec ledit deuxième paquet de données, et
- une étape (E13) d'envoi du deuxième paquet de données à partir dudit numéro de port source.

11. Programme d'ordinateur comportant des instructions pour l'exécution des étapes du procédé de transmission de données selon la revendication 9 ou 10 lorsque ledit programme est exécuté par un ordinateur.

12. Support d'enregistrement lisible par un ordinateur sur lequel est enregistré un programme d'ordinateur comprenant des instructions pour l'exécution des étapes du procédé de transmission de données selon la revendication 9 ou 10.

13. Serveur DNS (110) configuré pour traiter une requête DNS, ledit procédé comprenant :

- des moyens de réception d'une requête DNS pour accéder à une application distante (104B) accessible via une passerelle (106B), et
- des moyens d'envoi d'une réponse DNS comprenant l'adresse IP de ladite passerelle,

ledit serveur DNS étant **caractérisé en ce qu'**il comprend en outre :

- des moyens de vérification pour déterminer si un identifiant d'une plage de ports est stocké dans ledit serveur DNS en association avec l'adresse IP de ladite passerelle, et
- des moyens d'insertion configurés pour insérer, lorsque le résultat de ladite vérification est positif, ledit identifiant dans la réponse DNS avant l'envoi de ladite réponse DNS.

14. Passerelle (106A) configurée pour transmettre des données vers une seconde passerelle (106B) selon un procédé de transmission de données conforme à l'une quelconque des revendications 4 à 6, ladite passerelle comprenant :

- des moyens de détermination (222A), à partir d'un identifiant d'une plage de ports associé à l'adresse IP de la seconde passerelle (106B), du numéro de port de destination vers lequel les données doivent être transmises, et
- des moyens d'envoi desdites données audit numéro de port de destination.

15. Passerelle (106B) configurée pour transmettre des données vers un serveur (102B) d'un réseau local (LAN_B) accessible via ladite passerelle, selon un procédé de transmission de données conforme à l'une des revendications 9 ou 10, la passerelle comprenant :

- des moyens de stockage (116B) d'un identifiant d'une plage de ports associé à ladite passerelle,

- des moyens de détermination (222B), à partir dudit identifiant, du numéro de port de destination du serveur vers lequel des données doivent être transmises, et
- des moyens d'envoi desdites données audit numéro de port de destination.

**Patentansprüche**

1. Verfahren zur Verwaltung einer DNS-Anfrage, die von einem DNS-Server (110) erstellt wurde, wobei das Verfahren umfasst:

   - einen Schritt (E2) des Empfangens einer DNS-Anfrage, um auf eine entfernte Anwendung (104B), die über ein Gateway (106B) zugänglich ist, zuzugreifen, und
   - einen Schritt (E3) des Sendens einer DNS-Antwort, umfassend die IP-Adresse des Gateways,

   wobei das Verfahren **dadurch gekennzeichnet ist, dass** es ferner umfasst:

   - einen Überprüfungsschritt, um zu bestimmen, ob ein Identifikator eines Port-Bereichs in dem DNS-Server in Verbindung mit der IP-Adresse des Gateways gespeichert ist, und
   - falls dies der Fall ist, einen Schritt des Einsetzens des Identifikators in die DNS-Antwort vor dem Senden der DNS-Antwort.

2. Computerprogramm, umfassend Instruktionen für die Ausführung der Schritte des Verfahrens zur Verwaltung einer DNS-Antwort nach Anspruch 1, wenn das Programm von einem Computer ausgeführt wird.

3. Aufzeichnungsträger, der von einem Computer lesbar ist, auf dem ein Computerprogramm aufgezeichnet ist, umfassend Instruktionen für die Ausführung der Schritte des Verfahrens zur Verwaltung einer DNS-Antwort nach Anspruch 1.

4. Verfahren zur Datenübertragung in einem ersten Gateway (106A) zu einem zweiten Gateway (106B), wobei das Verfahren umfasst:

   - einen vorherigen Schritt (E4) der Speicherung in dem ersten Gateway eines Identifikators eines Port-Bereichs und der IP-Adresse, die dem zweiten Gateway zugeordnet sind, zu dem die Daten übertragen werden sollen, wobei der Identifikator von einem DNS-Server (110) als Antwort auf eine DNS-Anfrage entsprechend dem Verfahren aus Anspruch 1 erhalten wird,
   - einen Schritt (E7) der Bestimmung der Nummer eines Bestimmungsports, zu dem die Daten übertragen werden sollen, anhand des Identifikators, und
   - einen Schritt (E8) des Sendens der Daten an die Bestimmungsportnummer des zweiten Gateways.

5. Verfahren nach Anspruch 4, wobei der Bestimmungsschritt ferner umfasst:

   - wenn eine Bestimmungsportnummer ursprünglich in die Daten eingeschlossen ist, während des Bestimmungsschrittes die Bestimmung der Nummer des Bestimmungsports, zu dem die Daten übertragen werden sollen, anhand des Identifikators und der ursprünglichen Bestimmungsportnummer, und den Ersatz der ursprünglichen Bestimmungsportnummer durch die während des Bestimmungsschrittes bestimmte Bestimmungsportnummer, oder
   - wenn keine Bestimmungsportnummer ursprünglich in die Daten eingeschlossen ist, die Verkapselung der Daten in einem Datenpaket, umfassend den während des Bestimmungsschrittes bestimmten Bestimmungsport.

6. Verfahren nach Anspruch 4 bis 5, wobei das Verfahren ferner mit den Daten die Übertragung einer Quellenportnummer umfasst, die anhand eines Identifikators eines Port-Bereichs, der dem ersten Gateway zugeordnet ist, bestimmt wurde, wobei der Identifikator in dem ersten Gateway gespeichert ist.

7. Computerprogramm, umfassend Instruktionen für die Ausführung der Schritte des Datenübertragungsverfahrens nach einem der Ansprüche 4 bis 6, wenn das Programm von einem Computer ausgeführt wird.

8. Aufzeichnungsträger, der von einem Computer lesbar ist, auf dem ein Computerprogramm aufgezeichnet ist, umfassend Instruktionen für die Ausführung der Schritte des Datenübertragungsverfahrens nach einem der Ansprüche 4 bis 6.

9. Verfahren zur Übertragung eines ersten Datenpakets von einem zweiten Gateway (106B) zu einem Server (102B) eines lokalen Netzwerks (LAN_B), das über das zweite Gateway zugänglich ist, wobei das erste Datenpaket an das zweite Gateway durch ein erstes Gateway (106A) gemäß dem Verfahren nach einem der Ansprüche 4 bis 6 übertragen (E8) wurde,
wobei das Verfahren umfasst:

- einen vorherigen Schritt der Speicherung eines Port-Bereichs, der dem zweiten Gateway zugeordnet ist,
- einen Schritt (E9) der Bestimmung der Bestimmungsportnummer des Servers, zu dem das erste Datenpaket übertragen werden soll, anhand des Identifikators und einer Bestimmungsportnummer, die ursprünglich in das erste Datenpaket eingeschlossen waren, und
- einen Schritt (E10) des Sendens des ersten Datenpakets an die Bestimmungsportnummer des Servers.

10. Verfahren nach Anspruch 9, wobei das Verfahren ferner umfasst:

- einen Schritt (E11) des Empfangens vom zweiten Gateway eines zweiten Datenpakets, das vom Server (102B) als Antwort auf das erste Datenpaket gesandt wurde,
- einen Schritt (E12) der Bestimmung einer mit dem zweiten Datenpaket zu übertragenden Quellenportnummer anhand des Identifikators,
- einen Schritt (E13) des Sendes des zweiten Datenpakets anhand der Quellenportnummer.

11. Computerprogramm, umfassend Instruktionen für die Ausführung der Schritte des Datenübertragungsverfahrens nach Anspruch 9 oder 10, wenn das Programm von einem Computer ausgeführt wird.

12. Aufzeichnungsträger, der von einem Computer lesbar ist, auf dem ein Computerprogramm aufgezeichnet ist, umfassend Instruktionen für die Ausführung der Schritte des Datenübertragungsverfahrens nach Anspruch 9 oder 10.

13. DNS-Server (110), der zur Bearbeitung einer DNS-Anfrage ausgeführt ist, wobei der Server umfasst:

- Mittel zum Empfangen einer DNS-Anfrage, um auf eine entfernte Anwendung (104B), die über ein Gateway (106B) zugänglich ist, zuzugreifen, und
- Mittel zum Senden einer DNS-Antwort, umfassend die IP-Adresse des Gateways,

wobei der Server **dadurch gekennzeichnet ist, dass** er ferner umfasst:

- Überprüfungsmittel, um zu bestimmen, ob ein Identifikator eines Port-Bereichs in dem DNS-Server in Verbindung mit der IP-Adresse des Gateways gespeichert ist, und
- wenn das Ergebnis der Überprüfung positiv ist, Mittel zum Einsetzen des Identifikators in die DNS-Antwort vor dem Senden der DNS-Antwort.

14. Gateway (106A), das derart konfiguriert ist, dass es Daten zu einem zweiten Gateway (106B) nach einem Datenübertragungsverfahren nach einem der Ansprüche 4 bis 6 überträgt, wobei das Gateway umfasst:

- Mittel zur Bestimmung (222A) anhand eines Identifikators eines Port-Bereichs, der der IP-Adresse des zweiten Gateways (106B) zugeordnet ist, der Nummer eines Bestimmungsports, zu dem die Daten übertragen werden sollen, und
- Mittel zum Senden der Daten an die Bestimmungsportnummer.

15. Gateway (106B), das derart konfiguriert ist, dass es Daten zu einem Server (102B) eines lokalen Netzwerks (LAN_B), das über das Gateway zugänglich ist, nach einem Datenübertragungsverfahren nach einem der Ansprüche 9 oder 10 überträgt, wobei das Gateway umfasst:

- Mittel zum Speichern (116B) eines Identifikators eines Port-Bereichs, der dem Gateway zugeordnet ist,
- Mittel zur Bestimmung (222B) anhand des Identifikators der Nummer des Bestimmungsports, zu dem die Daten übertragen werden sollen, und
- Mittel zum Senden der Daten an die Bestimmungsportnummer.

**Claims**

1. Method for managing a DNS request carried out by a DNS server (110), the said method comprising:

   - a step (E2) for reception of a DNS request for accessing a remote application (104B) accessible via a gateway (106B), and
   - a step (E3) for sending a DNS response comprising the IP address of the said gateway,

   the said method being **characterized in that** it furthermore comprises:

   - a verification step for determining if an identifier of a range of ports is stored in the said DNS server in association with the IP address of the said gateway, and
   - in the affirmative, a step for inserting the said identifier into the DNS response prior to sending the said DNS response.

2. Computer program comprising instructions for the execution of the steps of the method for managing a DNS request according to Claim 1 when the said program is executed by a computer.

3. Recording media readable by a computer on which a computer program is recorded comprising instructions for the execution of the steps of the method for managing a DNS request according to Claim 1.

4. Method for transmitting data in a first gateway (106A) to a second gateway (106B), the said method comprising:

   - a preliminary step (E4) for storing in the first gateway an identifier of a range of ports and the IP address associated with the second gateway to which the said data are to be transmitted, the said identifier being obtained from a DNS server (110) in response to a DNS request according to the method of Claim 1,
   - a step (E7) for determining, based on the said identifier, the number of the destination port to which the data are to be transmitted, and
   - a step (E8) for sending the said data to the said destination port number of the second gateway.

5. Method according to Claim 4, the determination step furthermore comprising:

   - when a destination port number is initially included in the said data, the determination in the determination step of the destination port number to which the data are to be transmitted based on the identifier and on the initial destination port number, and the replacement of the initial destination port number by the said destination port number determined in the determination step, or
   - when no destination port number is initially included in the said data, the encapsulation of the said data within a data packet comprising the destination port determined in the said determination step.

6. Method according to either of Claims 4 and 5, the said method furthermore comprising the transmission, with the said data, of a source port number determined from an identifier of a range of ports associated with the first gateway, the said identifier being stored in the said first gateway.

7. Computer program comprising instructions for the execution of the steps of the data transmission method according to any one of Claims 4 to 6 when the said program is executed by a computer.

8. Recording media readable by a computer on which a computer program is recorded comprising instructions for the execution of the steps of the data transmission method according to any one of Claims 4 to 6.

9. Method for transmitting a first data packet using a second gateway (106B) to a server (102B) of a local area network (LAN_B) accessible via the said second gateway, the said first data packet having been transmitted (E8) to the said second gateway by a first gateway (106A) according to a method according to one of Claims 4 to 6, the said method comprising:

   - a preliminary step for storing the identifier of a range of ports associated with the said second gateway,
   - a step (E9) for determining, based on the said identifier and on a destination port number initially included within the first data packet, the destination port number of the server to which the said first data packet is to be transmitted, and

- a step (E10) for sending the said first data packet to the said destination port number of the server.

10. Method according to Claim 9, the said method furthermore comprising:

- a step (E11) for receiving via the said second gateway a second data packet sent by the server (102B) in response to the said first data packet,
- a step (E12) for determining, based on the said identifier, a source port number to be transmitted with the said second data packet, and
- a step (E13) for sending the second data packet from the said source port number.

11. Computer program comprising instructions for the execution of the steps of the data transmission method according to either of Claims 9 and 10 when the said program is executed by a computer.

12. Recording media readable by a computer on which a computer program is recorded comprising instructions for the execution of the steps of the data transmission method according to either of Claims 9 and 10.

13. DNS server (110) configured for processing a DNS request, the said method comprising:

- means for receiving a DNS request for accessing a remote application (104B) accessible via a gateway (106B), and
- means for sending a DNS response comprising the IP address of the said gateway, the said DNS server being **characterized in that** it furthermore comprises:
- verification means for determining whether an identifier of a range of ports is stored in the said DNS server in association with the IP address of the said gateway, and
- insertion means configured for inserting, when the result of the said verification is positive, the said identifier in the DNS response prior to sending the said DNS response.

14. Gateway (106A) configured for transmitting data to a second gateway (106B) according to a data transmission method according to any one of Claims 4 to 6, the said gateway comprising:

- means (222A) for determining, based on an identifier of a range of ports associated with the IP address of the second gateway (106B), the destination port number to which the data are to be transmitted, and
- means for sending the said data to the said destination port number.

15. Gateway (106B) configured for transmitting data to a server (102B) of a local area network (LAN_B) accessible via the said gateway, according to a data transmission method according to either of Claims 9 and 10, the gateway comprising:

- means (116B) for storing an identifier of a range of ports associated with the said gateway,
- means (222B) for determining, based on the said identifier, the destination port number of the server to which data are to be transmitted, and
- means for sending the said data to the said destination port number.

**FIG.1**
Art antérieur

FIG.2

EP 2 553 908 B1

| 0 | 1023 | 1024 | 1280 | 2047 | 2048 | 3071 | 3072 | 3328 | 4095 | 4096 | | 65536 |

Plage de port 0  Plage de port 1  Plage de port i

EPC_0  EPSU_0  EAP_0  EPC_1  EPSU_1  EAP_1  EPC_i  EPSU_i  EAP_i

PS_0  PS_1  PS_i

**FIG.3**

**FIG.4**

EP 2 553 908 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009125158 A2
- WO 2010004156 A1

- WO 2010004180 A1

**Littérature non-brevet citée dans la description**

- **BOUCADAIR M et al.** *Anticipate IPv4 Address Exhaustion: a Critical Challenge for Internet Survival,* 23 Août 2009, ISBN 978-1-4244-4718-3